# EUROPEAN PATENT SPECIFICATION

(11) **EP 2 703 269 B1**
(45) Date of publication and mention of the grant of the patent: **27.05.2015**
(21) Application number: 13177833.4
(22) Date of filing: 24.07.2013
(51) Int. Cl.: B62J 99/00, B62K 11/10

(54) **Mobile terminal housing structure for saddle-ride type vehicle**
Gehäusestruktur eines mobilen Endgeräts für ein Sattelfahrzeug
Structure de boîtier de terminal mobile pour véhicule de type à enfourcher

(30) Priority: 27.08.2012 JP 2012186738
(43) Date of publication of application: 05.03.2014
(73) Proprietor: Honda Motor Co., Ltd., Tokyo 107-8556 (JP)
(72) Inventor: Atsuchi, Michio, Wako-shi, Saitama 351-0193 (JP); Yokouchi, Kohei, Wako-shi, Saitama 351-0193 (JP); Fujitsu, Shun, Wako-shi, Saitama 351-0193 (JP)
(74) Representative: Stevens, Jason Paul

(56) References cited:
- EP-A1- 2 085 306
- EP-A2- 1 081 035
- FR-A1- 2 809 681
- JP-A- H11 321 754
- JP-A- 2004 136 734

## Description

The present invention relates to a saddle-ride type vehicle having a mobile terminal structure, and in particular to a structure including: a housing part which is provided in a front part cover and is capable of housing a mobile terminal; and a transparent window which is provided at the upper surface of this housing part and through which the mobile terminal is visible.

For saddle-ride type vehicles such as scooter-type motorcycles, a configuration is known in which a part projecting toward a floor tunnel part is provided on a rear part of a front part cover, and a housing to house an audio device is provided in this projecting part (see Japanese Patent Application Publication No. 2004-136734, for example). In the configuration of Japanese Patent Application Publication No. 2004-136734, a display of the audio device inside the housing is covered with a transparent lid, and the outer side of this transparent lid is covered with an opaque cover which is rearwardly slideable.

Here, in the configuration of Japanese Patent Application Publication No. 2004-136734, the projecting part bulges to such an extent that its rear end is situated rearward of the lower end of the floor tunnel part (the portion of the upper surface of the floor tunnel part which has the lowest height), i.e. in the proximity to the rider seat. This causes a problem in that the rider may experience difficulty in straddling the floor tunnel part when getting on and off the vehicle, and thus the ease of getting on and off the vehicle is impaired. Moreover, while the inside of the projecting part is visible through the transparent lid, the projecting part may easily be influenced by sunlight since it greatly projects to an open region on the floor tunnel part side. This causes a problem in that when a mobile terminal is housed in the housing part, the visibility of that mobile terminal may be impaired and the temperature inside the housing increases easily. A similar vehicle is disclosed in document JPH 11321754 which is considered the closest prior art.

The present invention has been made in view of the above circumstances, and it is an object of at least the preferred embodiments to provide a mobile terminal housing structure for a saddle-ride type vehicle capable of reducing the influence of sunlight on a mobile terminal housing part, while maintaining the ease of straddling a floor tunnel part at a good level.

According to a first aspect of the present invention, there is provided a mobile terminal housing structure for a saddle-ride type vehicle, comprising: a handlebar joined to a handlebar shaft rotatably supported on a head pipe; a front part cover covering a peripheral area of the head pipe; a floor tunnel part lying between a rear lower portion of the front part cover and a rider seat; a bulging part provided on the front part cover and bulging toward the rider seat; a housing part provided on the bulging part and being capable of housing a mobile terminal; and a window provided in an upper surface of the housing part and through which the mobile terminal is visible, wherein a rear end of the bulging part is set forward of a lowermost portion of an upper surface of the floor tunnel part, and the window is provided in a region rearwardly of a front end of the handlebar and forwardly of rear ends of the handlebar and the bulging part, and below an upper end of the handlebar; wherein the window has a surface which is substantially continuous with the front part cover, and the housing part has a mounting surface adapted to mount the mobile terminal inclined downwardly and rearwardly at a higher inclication than the window.

According to this configuration, with the handlebar functioning as a shield which blocks sunlight to reduce the influence of sunlight on the window and the housing part, it is possible to improve the visibility of the mobile terminal and also to reduce increase in the temperature inside the housing part, while maintaining the ease of straddling the floor tunnel part at a good level.

Preferably, the window is inclined downwardly and rearwardly, and the housing part is adapted to support the mobile terminal downwardly and rearwardly.

With this configuration, the window and the mobile terminal can be oriented toward the face of the rider. Accordingly, it is possible to improve the visibility of the mobile terminal, and also to reduce the space required in the longitudinal direction of the vehicle for disposing the window and placing the mobile terminal.

Thus, it is possible to efficiently secure the space to place the mobile terminal, while further reducing the amount the window projects as well as the amount the bulging part bulges rearwardly. Accordingly, the freedom in placement of the mobile terminal can be improved.

In a preferred form, there is a handlebar cover covering the handlebar. With this configuration, the handlebar cover can function as a shield which blocks sunlight, thereby making it possible to further reduce the influence of sunlight and the temperature increase.

In a further preferred form, the handlebar cover is provided with a shading portion which serves as a sunshade for the window. Thus, it is possible to even further reduce the influence of sunlight and the temperature increase.

Preferably, the window is provided in such a region as to be situated under and be overlapped by the handlebar in a plan view when the handlebar is fully turned.

According to this configuration, it is possible to more effectively reduce any increase in the temperature of the mobile terminal due to sunlight when the saddle-ride type vehicle is parked with the handlebar fully turned.

In a further preferred form, the window is provided at a substantially central position of the handlebar in a plan view.

With this arrangement, the window is provided at a position which is always easily visible, regardless of whether the handlebar is at the straight-ahead travel position or turned to the left or right. Accordingly, the visibility of the mobile terminal can be secured.

Preferably, the window includes a variable light transmission filter disposed on a rider side with respect to the mobile terminal, and configured to switch to a light-transmitting state when the saddle-ride type vehicle is in operation, and to switch to a non-light-transmitting state when the saddle-ride type vehicle is not in operation.

According to this configuration, it is possible to reduce any increase in the temperature of the mobile terminal due to sunlight when the saddle-ride type vehicle is not in operation.

Preferred embodiments of the invention will now be described by way of example only and with reference to the accompanying drawings, in which:
Fig. 1 is a left-side view of a motorcycle according to a first embodiment of the present invention;
Fig. 2 is a view of a front part of the vehicle body as seen from the left;
Fig. 3 is a view of the front part of the vehicle body as seen by a rider seated on a seat;
Fig. 4 is a view of the front part of the vehicle body as seen from above;
Fig. 5 is a view of a handlebar in a state of being fully turned to the left, as seen from above;
Fig. 6 is a perspective view showing a mobile terminal housing part together with its peripheral structure;
Fig. 7 is a vertical cross-sectional view of the mobile terminal housing part;
Fig. 8 is a vertical cross-sectional view of a mobile terminal housing part of a motorcycle according to a second embodiment;
Fig. 9 is a vertical cross-sectional view of the mobile terminal housing part of the second embodiment in an open position;
Fig. 10 is a perspective view of the mobile terminal housing part of the second embodiment without the window;
Fig. 11 is a view of a first variant of the front part of the vehicle body as seen by a reader seated on a seat;
Fig. 12 is a side view of the first variant of the front part of the vehicle body; and
Fig. 13 is a view from above of a second variant of the front part of the vehicle body.

Hereinbelow, some embodiments of the present invention will be described with reference to the drawings. Note that directions such as front, rear, left, right, upper and lower as mentioned in the following description should be interpreted with regard to the vehicle in use, unless otherwise noted. Moreover, the references FR, UP, and LE in the drawings represent the front, upper, and left sides of the vehicle body, respectively.

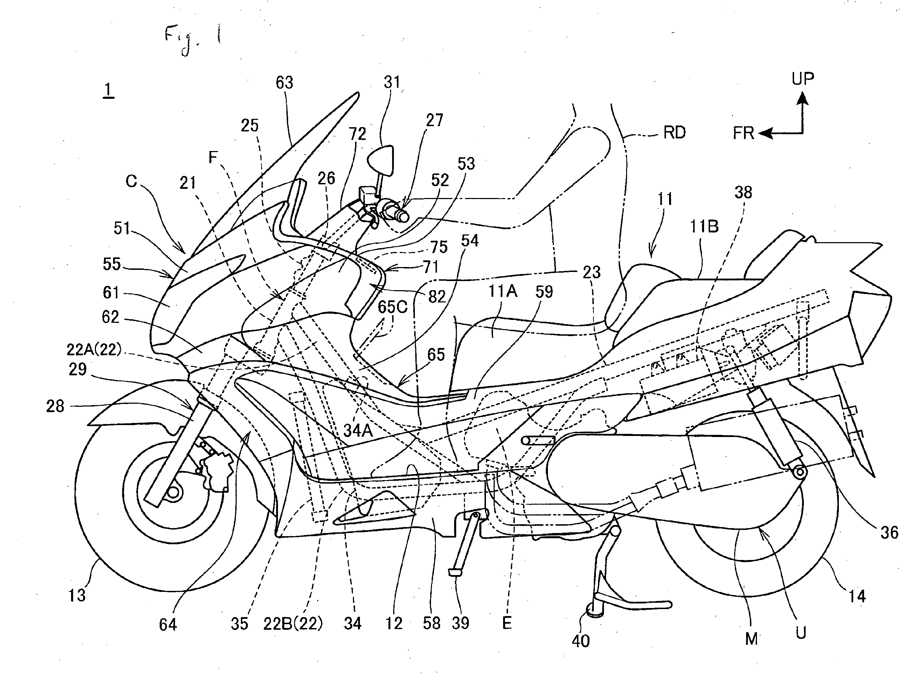

Fig. 1 is a left-side view of a motorcycle according to a first embodiment of the present invention.

A motorcycle (saddle-ride type vehicle) 1 is a scooter-type vehicle including low step floors 12 for a rider (driver) RD seated on a rider seat (hereinafter, referred to as the seat) 11 to place his/her feet. The motorcycle 1 includes a front wheel 13 at the front of a vehicle body frame F and a rear wheel 14 as a drive wheel rotationally supported on an engine unit U, joined to a rear part of the vehicle body frame F. The vehicle body frame F is covered with a vehicle body cover C made of synthetic resin.

The vehicle body frame F includes: a head pipe 21 provided at a front part; down tubes 22 extending rearwardly from the head pipe 21; and rear frames 23 extending rearwardly from the down tubes 22.

The head pipe 21 is a support member which rotatably supports a steering stem 25 constituting a handlebar shaft. A handlebar 27 is attached to an upper portion of the steering stem 25 through a handlebar holder 26, while left and right front forks 28 which rotatably support the front wheel 13 are attached to a lower portion of the steering stem 25. The steering stem 2, handlebar 27, and front forks 28 constitute a steering system 29 for steering the front wheel 13 to the left and right.

Incidentally, a pair of left and right side mirrors 31 are attached to the handlebar 27.

The down tubes 22 include: a pair of left and right upper down tubes 22A extending downwardly and rearwardly from the head pipe 22; and a pair of left and right lower down tubes 22B extending downwardly and rearwardly from the head pipe 21 below the upper down tubes 22A. Each upper down tube 22A extends downwardly and rearwardly at a low inclination toward a lower side of the seat 11 and joins the corresponding lower down tube 22B on the lower side of the seat 11.

Each lower down tube 22B extends downwardly and rearwardly at a higher inclination than the upper down tubes 22A and then bends and extends substantially horizontally toward the rear. A rear end portion of the upper down tube 22A joins this horizontal portion. The lower down tube 22B extends upwardly and rearwardly behind this joining portion and joins the corresponding rear frame 23.

The rear frames 23 extend upwardly and rearwardly from the pair of left and right upper down tubes 22A at positions forward of the seat 11, respectively, and extend to a rear part of the motorcycle 1. The rear frames 23 support the seat 11 and also support a storage box (not shown) located under the seat 11. The storage box is upwardly open and is opened and closed by the seat 11 disposed thereabove.

A fuel tank 34 is disposed in a region surrounded by the upper and lower down tubes 22A and 22B, and is thus disposed forward of and below the seat 11. A radiator 35 for cooling down the engine unit U is disposed forward of the fuel tank 34 between the lower down tubes 22B and the front wheel 13.

The engine unit U has its front portion swingably supported on rear portions of the lower down tubes 22B, so that the engine unit U is disposed rearwardly of the fuel tank 34 and below the seat 11. The engine unit U has an engine E integrated with a transmission case M housing a belt-type continuously variable transmission. The rear wheel 14 is rotatably supported on a rear portion of the transmission case M. Thus, the engine unit U also functions as a swing arm that swingably supports the rear wheel 14. A rear cushion (shock absorber) 36 is laid between the transmission case M and one of the rear frames 23.

Further, a battery 38 for supply of electric power to parts of the motorcycle 1, an engine intake system (not shown), and the like are arranged in a space between the engine unit U and the seat 11. Furthermore, a side stand 39 and a centre stand 40 to be used for parking the motorcycle 1 are foldably provided on the vehicle body frame F. The side stand 39 is a stand that allows the motorcycle 1 to stand by itself while inclined leftward with respect to the ground, and the centre stand 40 is a stand that allows the motorcycle 1 to stand by itself vertically with respect to the ground.

The seat 11 is a seat, longer in the longitudinal direction of the motorcycle and extending rearwardly from a longitudinally central part of the motorcycle 1. The seat 11 integrally includes a front seat 11A for the driver (rider RD) to sit and a rear seat 11 B for a passenger to sit, which is formed higher than the front seat 11 A.

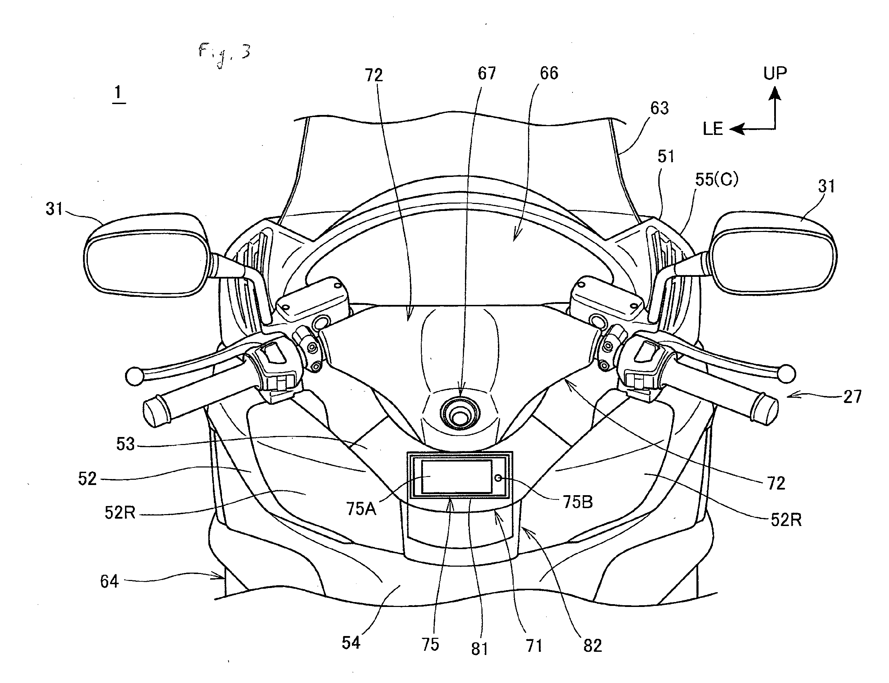

The vehicle body cover C includes a front cover 51, an upper inner cover 52, an upper surface cover 53, and a lower inner cover 54, and these form a front part cover (also called the front cowl) 55 covering the front part of the vehicle body. The front cover 51 covers the front, left, and right sides of the head pipe 21 and the steering stem 25. The upper inner cover 52 is attached to the front cover 51 from the rear of the vehicle body in such a way as to cover the rear side of the head pipe 21. The upper surface cover 53 covers the gap between the front cover 51 and the upper inner cover 52 from above at a position below the handlebar 27 and functions also as a meter cover surrounding a meter 66 (see Fig. 3). The lower inner cover 54 is joined to a lower portion of the upper inner cover 52.

The vehicle body cover C also includes: a floor skirt 58 covering the lower side of each step floor 12; a body side cover 59 covering the lateral sides of the vehicle body below the seat 11; and the like.

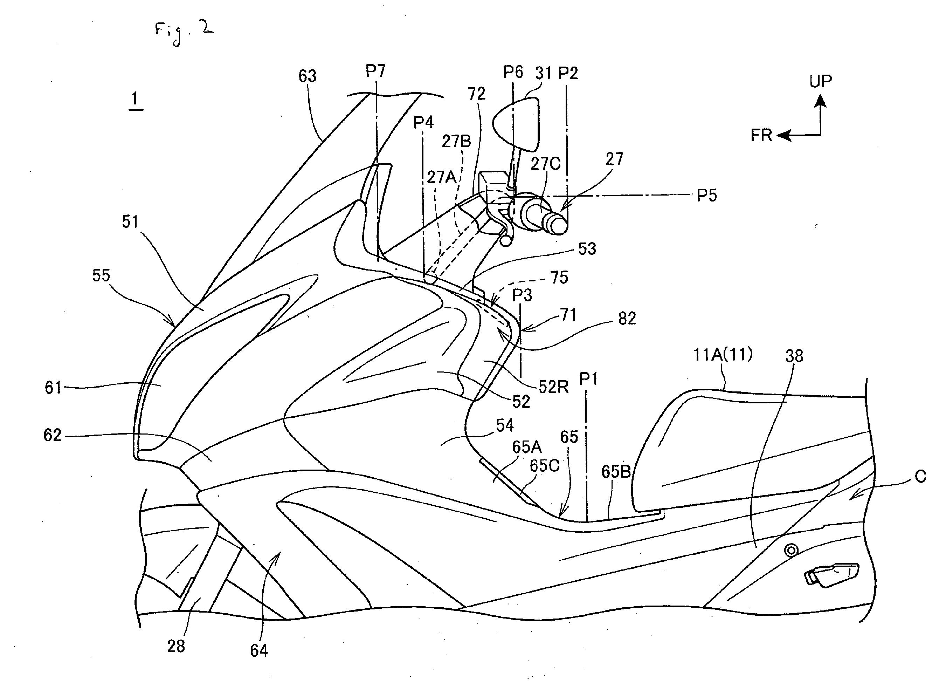

Fig. 2 is a view of the front part of the vehicle body as seen from the left.

A headlight 61 and directional signals 62 are supported at the front end of the front cover 51. On a front upper portion of the front cover 51, there is provided a windscreen 63 inclining upwardly and rearwardly and extending above the front cover 51.

Front portions of the upper inner cover 52 and the lower inner cover 54 project in the lateral direction of the vehicle and extend in the vertical direction so as to cover the front side of the legs of the rider RD (Fig. 1) when seated on the front seat 11A, thus forming leg shield parts 64.

Moreover, a part of the lower inner cover 54 between a middle portion thereof and the rear end thereof in the longitudinal direction of the vehicle extends longitudinally between the front part of the vehicle body and the seat 11 and bulges upward between the left and right step floors 12 while covering the upper down tubes 22A from above, thus forming a floor tunnel part 65.

Specifically, the floor tunnel part 65 includes: a front floor tunnel part 65A forming an inclined surface inclined downwardly and rearwardly; and a rear floor tunnel part 65B extending rearwardly from the front floor tunnel part 65A at an inclination which is nearer to the horizontal than the front floor tunnel part 65A is. In general, once the position of the seat 11 is determined, a position which the rider RD getting on and off the seat 11 is likely to straddle can be roughly determined.

In this embodiment, a position P1, located forwardly of the seat 11 by a predetermined length, is set as a reference position which a presumed rider RD (e.g. a rider of an average body size) would straddle. The reference position P1 is set at the vertically lowest portion of the upper surface of the floor tunnel part 65. Moreover, a rear end position P2 of the handlebar (when the handlebar is set at the straight travel position) 27 is set forward of the vertically lowest portion P1 of the floor tunnel part 65. A rear end position P3 of a bulging part 71 formed by the upper inner cover 52 and the upper surface cover 53 which bulges toward the seat 11 is set forward of the rear end position P2 of the handlebar 27. A front end position P4 of the handlebar 27 is set forward of the rear end position P3.

As shown in Fig. 1, the front floor tunnel part 65A is provided with a fuel lid 65C which may be opened and closed. The fuel lid is located above a fuel port 34A provided in the fuel tank 34, and the motorcycle 1 can be refuelled by opening the fuel lid 65C.

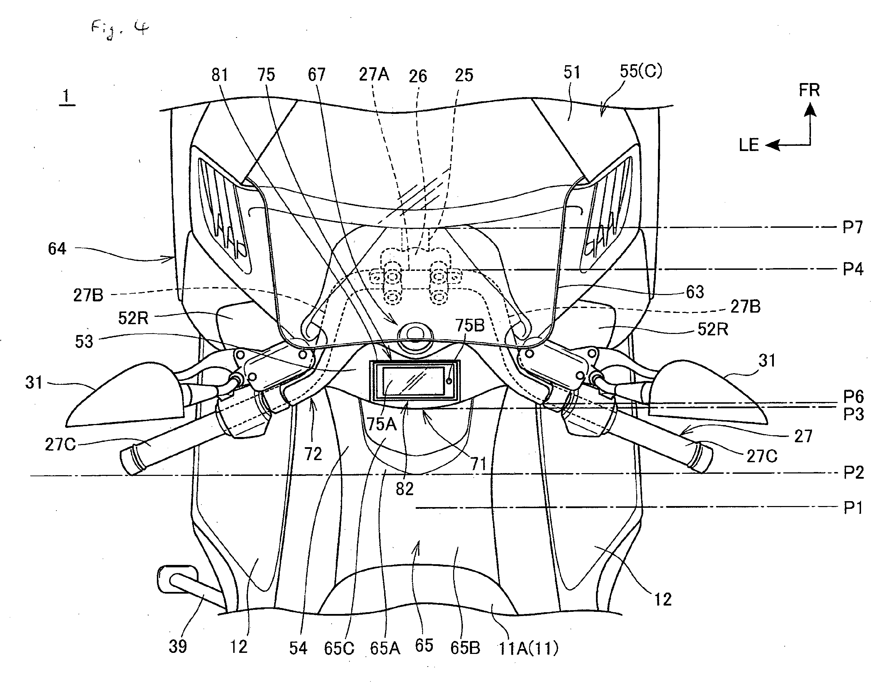

Fig. 3 is a view of the front part of the vehicle body as seen by the rider RD seated on the seat 11. Fig. 4 is a view of the front part of the vehicle body as seen from above.

As shown in Figs. 2 to 4, the motorcycle 1 includes a handlebar cover 72 covering the handlebar 27. The handlebar 27 integrally includes: a holder support part 27A which is located at the centre in the lateral direction of the vehicle and supported on the handlebar holder 26; a pair of left and right rising parts 27B which rise upwardly and rearwardly from the ends of the holder support part 27A; and a pair of left and right rider grip parts 27C for the rider RD to grip which extend left and right from upper end portions of the rising parts 27B. In addition, the handlebar cover 72 is formed as an upwardly bulging cover member which, in a side view of the vehicle body, rises upwardly and rearwardly from a substantially longitudinally central position of the upper surface cover 53 and covers peripheral areas of the holder support part 27A and the pair of left and right rising parts 27B. Reference numerals P5, P6, and P7 shown in Figs. 2 and 4 denote the upper end position (height) of the handlebar 27, the rear end position of the handlebar cover 72, and the front end position of the handlebar cover 72, respectively.

As shown in Fig. 2, the holder support part 27A of the handlebar 27 is provided at the substantially longitudinally central position of the upper surface cover 53. The meter 66 (Fig. 3), which displays vehicle information such as vehicle speed, is disposed in a space in front of the holder support part 27A, and a key cylinder 67 (Figs. 3 and 4) is disposed in a space behind the holder support part 27A.

Further, as shown in Fig. 3, a pair of openable and closable left and right lids 52R are provided at an upper rear surface of the upper inner cover 52. The lids 52R allow access to a pair of left and right front storage boxes (not shown) provided inside the front part cover 55 (inside the front cover 51).

The space behind the holder support part 27A (that is, the bulging part 71 of the front part cover 55 bulging toward the seat 11) is located in front of the rider RD relatively near to the face of the rider RD, and is particularly at a position easily visible to the rider RD. In this respect, in this configuration, a transparent window 81 (Figs. 3 and 4) is provided in the upper surface of the bulging part 71, and a mobile terminal housing part 82 (Figs. 3 and 4) to house a mobile terminal 75 so that it is visible through the window 81 is provided.

The layout of the mobile terminal housing part 82 and its peripheral structure will now be described.

The mobile terminal housing part 82 is designed to house the mobile terminal 75 (such as a mobile phone or a small-sized electronic device such as a PDA (Personal Digital Assistant)) carried by the rider RD, and holds the mobile terminal 75 immediately under the window 81 provided in the upper surface of the bulging part 71. The mobile terminal 75 of this embodiment is illustrated as a mobile terminal which includes a display 75A (Figs. 3 and 4) and a control 75B (Figs. 3 and 4) on the same surface of its substantially rectangular thin housing. However, the mobile terminal 75 is not limited to this configuration.

As shown in Figs. 3 and 4, the window 81 is formed in a substantially rectangular shape, longer in the lateral direction of the vehicle than in the longitudinal direction of the vehicle, at the centre (in the lateral direction of the vehicle) of the bulging part 71. The window 81 is disposed such that the inside of the upper surface cover 53 forming the upper surface of the bulging part 71 is visible.

In this case, as shown in Fig. 4, the window 81 is provided within a space which, in a plan view of the vehicle body, is rearward of the holder support part 27A of the handlebar 27 and between the pair of left and right rising parts 27B of the handlebar 27 when the handlebar 27 is in the straight travel position.

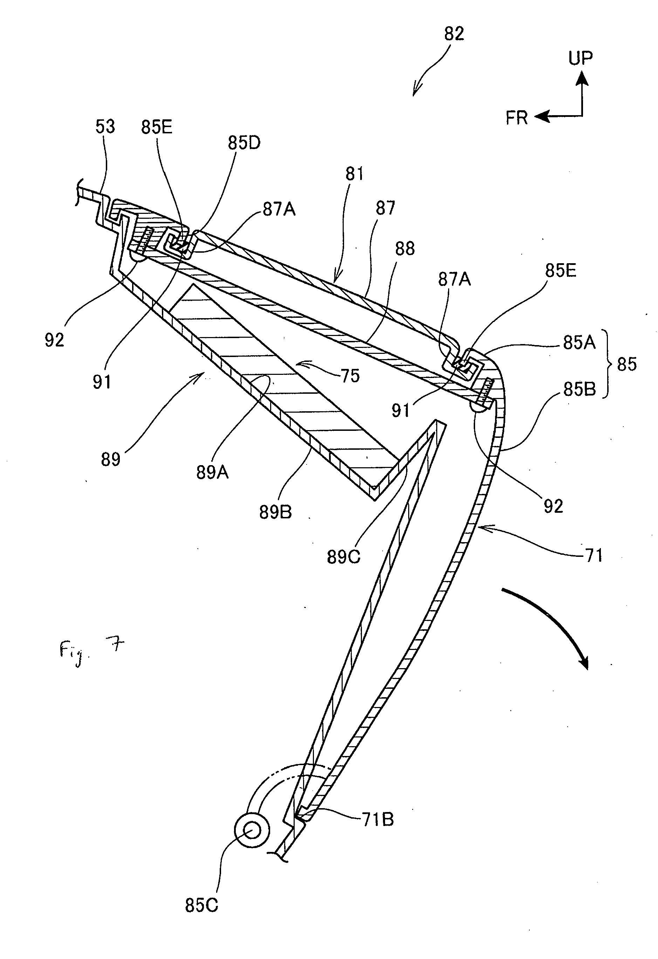

Moreover, as shown in Figs. 2 and 7, the upper surface cover 53 is inclined downwardly and rearwardly in a side view of the vehicle body, and the window 81 is disposed at the same inclination as the upper surface cover 53. Thus, the window 81 forms a surface which is substantially continuous with the upper surface of the upper surface cover 53, and is inclined to face the face of the rider RD (Fig. 1) seated on the seat 11.

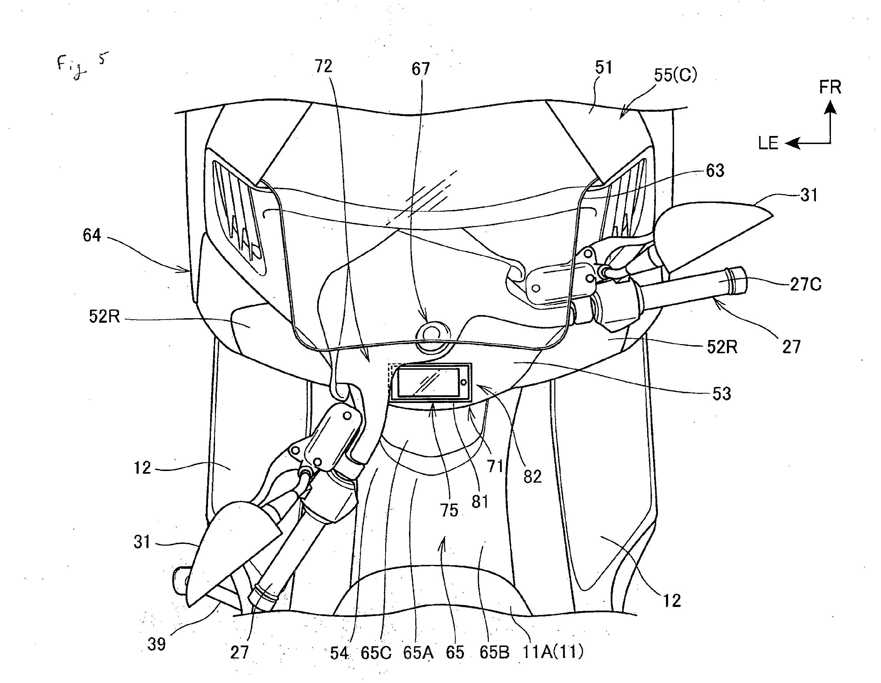

Fig. 5 is a view of the handlebar 27 in a state of being fully turned to the left, as seen from above. This turned state is a position in which the handlebar can be locked with a handlebar lock device (not shown). By being locked when the motorcycle 1 is parked using the side stand 39 or the centre stand 40, the handlebar 27 is held in this turned state.

In this turned state, too, the window 81 is disposed rearwardly of the holder support part 27A of the handlebar 27 and at the centre in the lateral direction of the vehicle; thus, most of the window 81 is exposed upwardly between the pair of left and right rising parts 27B of the handlebar 27 and is therefore visible to the rider RD.

Note that the window 81 of this embodiment is formed to be large in the lateral direction of the vehicle so that mobile terminals 75 of various sizes can be visible. For this reason, as shown in Fig. 5 again, a part of the window 81 on the left side of the vehicle is hidden under the handlebar 27 when the handlebar 27 is in its fully turned state, but most of the area is exposed upwardly, and therefore enough of the mobile terminal 75 inside is visible to the rider RD.

Accordingly, regardless of whether the handlebar 27 is turned to the left or right, the mobile terminal 75 is visible to the rider RD through the window 81, and thus the visibility can be maintained. The window 81 may be made smaller so that it will not be hidden under the handlebar 27 in the fully turned state.

In this configuration, as shown in Fig. 2, the rear end position P3 of the bulging part 71 is set forward of the lowermost portion P1 of the floor tunnel part 65. In such a configuration, the window 81 is provided rearwardly of the front end position P4 of the handlebar 27 and forwardly of the rear end position P2 of the handlebar 27 and below the upper end position P5 of the handlebar 27.

In this case, the rear end position P3 of the bulging part 71 is located forwardly of the lowermost portion P1 of the floor tunnel part 65. Thus, the bulging part 71 does not obstruct the rider RD when he or she straddles the floor tunnel part 65. Accordingly, the ease of straddling can be maintained at a good level. Moreover, the window 81 is disposed on a rear lower side of and in proximity to the handlebar 27 rising upward and the handlebar cover 72 bulging upward. Thus, when the sun is located in front of the motorcycle 1, the handlebar 27 and the handlebar cover 72 can easily block sunlight, thereby making it possible to reduce the amount of direct sunlight on the window 81.

Thus, components of the vehicle body around the handlebar 27 can be effectively utilized to reduce direct sunlight on the window 81. In addition, as shown in Fig. 2 again, the window 81 is located forwardly of the rear end position P6 and rearwardly of the front end position P7 of the handlebar cover 72. Thus, the handlebar cover 72 can effectively reduce direct sunlight on the window 81. Moreover, depending upon the position of the sun, the pair of left and right side mirrors 31 provided on the handlebar 27 can also reduce direct sunlight on the window 81.

Further, the pair of left and right rising parts 27B and the pair of left and right rider grip parts 27C of the handlebar 27 are located on left and right sides of the window 81. Thus, when the sun is located to the left or right of the motorcycle 1, the handlebar 27 and the like can easily block sunlight, thereby making it possible to reduce direct sunlight on the window 81. Meanwhile, when the sun is located behind the motorcycle, the rider RD blocks sunlight, thereby making it possible to reduce direct sunlight on the window 81.

In summary, the motorcycle 1 can secure the ease of straddling the floor tunnel part 65 and, at the same time, utilize the handlebar 27 and the like to reduce direct sunlight on the window 81 and have the window 81 positioned in the shade more easily, regardless of which position the sun is located relative to the motorcycle. Accordingly, it is possible to reduce deterioration in the visibility of the mobile terminal 75, and to avoid an increase in the temperature of the mobile terminal 75 due to sunlight.

Furthermore, in this configuration, as shown in Figs. 2 to 5, the window 81 is provided at the centre (in the lateral direction of the vehicle) of the upper surface of the bulging part 71, inclined downwardly and rearwardly at the same inclination as the upper surface; moreover, the mobile terminal 75 is visible through the window 81 to the rider RD seated on the seat 11. Accordingly, the window 81 can be disposed to face the rider RD side to improve the visibility of the mobile terminal 75 while effectively utilizing the space of the bulging part 71.

In addition, as shown in Fig. 5, the window 81 is provided a region such that it is exposed to the rider RD side even when the handlebar 27 is fully turned. Accordingly, the visibility of the mobile terminal 75 can be secured regardless of the handlebar position.

Moreover, when the handlebar 27 is fully turned, the handlebar 27 is in proximity to the window 81 in a plan view of the vehicle body. Thus, when the motorcycle 1 is parked in this state, the handlebar 27 and the handlebar cover 72 can more easily block direct sunlight to the window 81. Accordingly, even in a case where the motorcycle 1 is parked for a long period of time with the mobile terminal 75 left housed in the mobile terminal housing part 82, an increase in the temperature of the mobile terminal 75 due to sunlight can be effectively reduced by setting the handlebar 27 in the fully turned state (in the state where the handlebar is locked).

The structure of the mobile terminal housing part 82 will now be described.

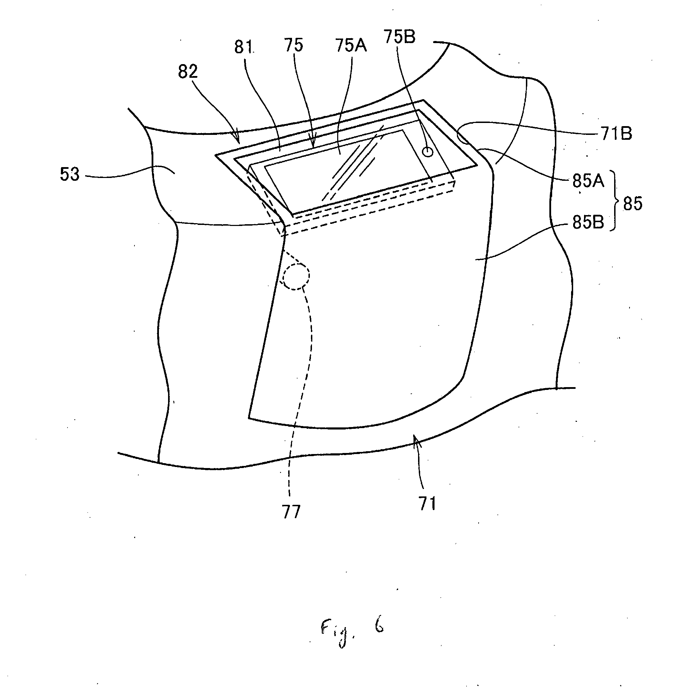

Fig. 6 is a perspective view showing the mobile terminal housing part 82 together with its peripheral structure. Fig. 7 is a vertical cross-sectional view of the mobile terminal housing part 82.

As shown in Fig. 6, an opening portion 71 B is formed in the bulging part 71 in a continuous manner from the upper surface to the rear surface thereof. The opening portion 71 B is covered with a lid member 85 constituting a main frame of the mobile terminal housing part 82. A power supply port 77 connected to the battery 38 (Fig. 1) is provided inside the opening portion 71A below the mobile terminal 75. By connecting the power supply port 77 and the mobile terminal 75 through a cable, it is possible to obtain operating power or charging power for the mobile terminal 75 from the battery 38.

Referring also to Fig. 7, the lid member 85 includes: a first lid part 85A which forms a part of the upper surface of the bulging part 71 and in which the window 81 is provided; and a second lid part 85B which forms a part of the rear surface of the bulging part 71. The lid member 85 is rotatably supported about a pivot shaft 85C provided near the lower edge of the lid member 85, so that it can be opened and closed.

In the first lid part 85A, an opening portion 85D is formed so as to be open upwardly and rearwardly. A protruding portion 85E, which protrudes downwardly and forwardly, is provided in a continuous manner at the inner edge of the opening portion 85D. The window 81 includes: a first window 87 made of a transparent material covering the opening portion 85D; and a second window 88 disposed under the first window 87.

The first window 87 includes a recessed portion 87A recessed downwardly and forwardly in a continuous manner at the outer edge thereof. The protruding portion 85E of the opening portion 85D is inserted in the recessed portion 87A with a seal member 91 therebetween, thereby closing the gap between the first window 87 and the opening portion 85D.

The second window 88 is fixed to the first lid part 85A by use of multiple fastening members 92 (bolts in this embodiment) in such a way as to cover the lower side of the first window 87. A mount 89 forming a mounting surface 89A to mount the mobile terminal 75 is provided under the second window 88.

As shown in Fig. 7, the mount 89 integrally includes: a mounting part 89B forming the mounting surface 89A on which the mobile terminal 75 can be mounted extending downwardly and rearwardly in side view at a higher inclination than the upper surface cover 53 and the window 81; and a rising wall 89C rising upward from the rear lower end of the mounting part 89B to stop downward and rearward movement of the mobile terminal 75 on the mounting part 89B. These are formed integrally with the upper surface cover 53.

As described above, the mobile terminal 75 is mounted at a higher inclination (downward and rearward) than the upper surface cover 53 and the window 81. Thus, the mobile terminal 75 can be housed in the bulging part 71, while the rearwardly bulging amount of the bulging part 71 is reduced. Moreover, the limited space inside the bulging part 71 is utilized such that the mobile terminal 75, which is relatively large, can be placed therein, or a smaller mobile terminal can be placed therein vertically. Thus, freedom in placement can be improved.

The second window 88 is a variable light transmission filter which varies the amount of light transmission between the rider RD and the mobile terminal 75. More specifically, the second window 88 is formed of a transmissive liquid crystal panel of a size large enough to cover the lower side of the first window 87, and is set to a normally black mode (NB mode) in which the liquid crystal panel displays a black (non light transmitting) state when not supplied with power. The NB mode can be set based on the direction in which the polarizing film is arranged.

The motorcycle 1 is configured such that power is supplied from the battery 38 to the second window 88 once a key-on state is established by inserting a key into the key cylinder 67 (Figs. 3 to 5) and performing a predetermined operation, whereas the supply of power from the battery 38 to the second window 88 is shut off when the state is switched to a key-off state.

The key-on state is an operating state in which the engine E (engine unit U) is started and engine operations can be performed, and corresponds to when the motorcycle 1 is in operation. Thus, when the motorcycle 1 is in operation, the second window 88, being a variable light transmission filter, is switched to a light display mode (light transmitting state), so that the mobile terminal 75 is visible to the rider RD through the second window 88 and the first window 87.

On the other hand, the key-off state is a state where the engine E (engine unit U) is stopped and any operations of the motorcycle 1 are not performed, and corresponds to when the motorcycle 1 is not in operation. When the motorcycle 1 is not in operation, the second window 88, being a variable light transmission filter, is switched to the black display mode (non light transmitting state), so that the second window 88 transmits no light, thereby making the mobile terminal 75 invisible to the rider RD and also blocking sunlight to the mobile terminal 75.

Accordingly, the mobile terminal 75 is visible when the motorcycle 1 is in operation (when the rider RD is riding the motorcycle 1). Increase in the temperature of the mobile terminal 75 due to sunlight can be reduced when the motorcycle 1 is not in operation (when the rider RD is off the motorcycle 1). In this case, use of the second window 88 which becomes opaque when the power is shut off allows reduction of the power consumption when the motorcycle 1 is parked. Moreover, since the mobile terminal 75 is invisible when the motorcycle 1 is not in operation, the mobile terminal 75 will not be seen from outside even in case where the mobile terminal 75 is misplaced. Accordingly, it is possible to prevent or reduce vandalism or theft by others and the like.

As described above, according to this embodiment, the rear end position P3 of the bulging part 71 of the front part cover 55 bulging toward the seat 11 is set forward of the lowermost portion P1 of the upper surface of the floor tunnel part 65. Moreover, the window 81 which is provided in the upper surface of the bulging part 71 and through which the mobile terminal 75 is visible is provided in the region rearward of the front end position P4 of the handlebar 27 and forward of the rear end positions of the handlebar 27 and the bulging part 71 and below the upper end position P5 of the handlebar 27. Thus, with the handlebar 27 functioning as a shield which blocks sunlight to reduce the influence of sunlight on the window 81 and the mobile terminal housing part 82, it is possible to improve the visibility of the mobile terminal 75 and also to reduce increase in the temperature inside the housing part 82, while maintaining the ease of straddling the floor tunnel part 65 at a good level.

Moreover, the window 81 is inclined downwardly and rearwardly, and the mobile terminal housing part 82 supports the mobile terminal 75 downwardly and rearwardly (that is, at the underside and rear of the mobile terminal 75). Thus, the window 81 and the mobile terminal 75 can be oriented toward the face of the rider RD. Accordingly, it is possible to improve the visibility of the mobile terminal 75 and also to reduce the space required in the longitudinal direction of the vehicle for disposing the window 81 and placing the mobile terminal 75.

Moreover, the window 81 has a surface which is substantially continuous with the upper surface cover 53 constituting a part of the front part cover 55. In addition, the mobile terminal housing part 82 has the mounting surface 89A to mount the mobile terminal 75 downward rearward at a higher inclination than the window 81. Thus, it is possible to efficiently secure the space to place the mobile terminal 75 while further reducing the amount the window 81 projects as well as the amount the bulging part 71 bulges rearward. Accordingly, the freedom in placement of the mobile terminal 75 can be improved.

Moreover, the handlebar cover 72 covering the handlebar 27 is provided. The handlebar cover 72 also functions as a shield which blocks sunlight, thereby making it possible to further reduce the influence of sunlight and the temperature increase.

Further, the window 81 is provided at the substantially central position of the handlebar 27 in a plan view of the vehicle body. Thus, the window 81 is always easily visible regardless of whether the handlebar 27 is at the straight travel position or turned to the left or right. Accordingly, the visibility of the mobile terminal 75 can be secured.

Moreover, when the handlebar 27 is fully turned, the handlebar 27 is in proximity to the window 81 in a plan view of the vehicle body as shown in Fig. 5. This further improves the shading effect of the handlebar 27. Accordingly, it is possible to further reduce increase in the temperature of the mobile terminal 75 when the motorcycle 1 is parked with the handlebar 27 fully turned.

Moreover, the window 81 includes the second window 88, which is a variable light transmission filter disposed on the rider side with respect to the mobile terminal 75 and configured to switch to a light transmitting state when the motorcycle 1 is in operation and to a non light transmitting state when the motorcycle 1 is not in operation. Accordingly, it is possible to even further reduce increase in the temperature of the mobile terminal 75 due to sunlight when the motorcycle 1 is not in operation.

In addition, the second window 88 uses power from the battery 38 to switch to the light transmitting state when the motorcycle 1 is in operation, whereas the supply of power is shut off when the motorcycle 1 is not in operation, thus making the second window 88 switch to the non light transmitting state. Accordingly, it is possible to reduce power consumption when the motorcycle 1 is parked and thus not in operation.

Furthermore, the first window 87 covers the upper side of the second window 88. Accordingly, it is possible to effectively prevent rainwater on the second window 88.

The first window 87 may be omitted if the second window 88 is formed in a water-proof structure or a drip-proof structure. Alternatively, the first window 87 and the second window 88 may be formed in an integrated structure, or either one of the windows 87 and 88 may be omitted. Thus, many variations are available.

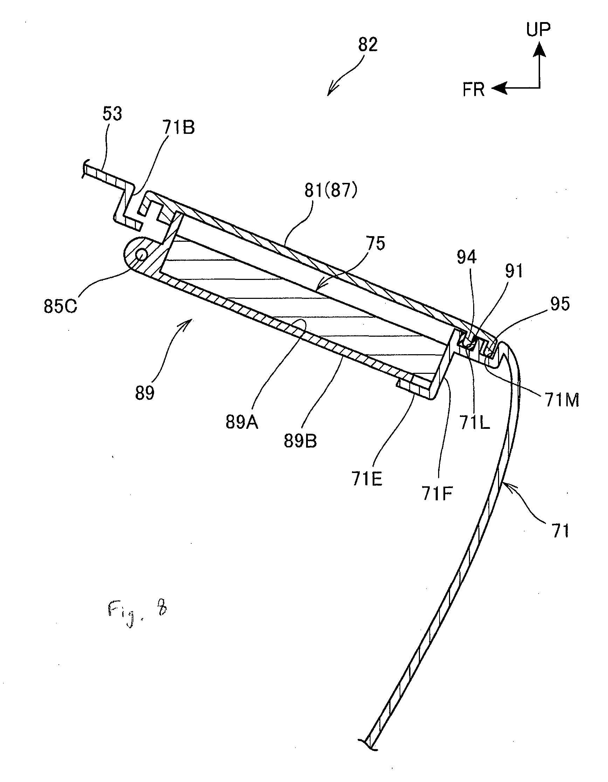

Fig. 8 is a vertical cross-sectional view of a mobile terminal housing part 82 of a motorcycle 1 according to a second embodiment.

The second embodiment is the same as the first embodiment except that the mobile terminal housing part 82 is different. In the second embodiment, an opening portion 71 B is formed only in the upper surface of a bulging part 71, and the mobile terminal housing part 82 is provided integrally with a transparent window 81 covering the opening portion 71B.

The window 81 is formed of a transparent plate member that closes the opening portion 71 B and forms a surface which is substantially continuous with the upper surface of an upper surface cover 53. Moreover, the window 81 also functions as a lid member 85 that openably and closably covers the opening portion 71 B, and forms a part of the upper surface of the bulging part 71 when closed. In other words, the window 81 of the second embodiment is equivalent to the first window 87 of the first embodiment.

A mount 89, which constitutes a main part of the mobile terminal housing part 82, is integrally joined to the lower surface of the window 81. The mount 89 has a mounting part 89B forming a mounting surface 89A to mount a mobile terminal 75 under the window 81 with a gap therebetween. With the window 81 closed, the mounting surface 89A is a surface which is inclined downwardly and rearwardly.

Moreover, in the bulging part 71, a support plate 71 E and a rising wall 71 F are formed integrally with each other. The support plate 71 E supports the mounting part 89B from below when the window 81 is in the closed position. The rising wall 71 F rises upwardly and rearwardly from the support plate 71 E, and stops downward and rearward movement of the mobile terminal 75 on the mounting part 89B.

The mounting part 89B is supported pivotally about a pivot shaft 85C provided at a front upper side.

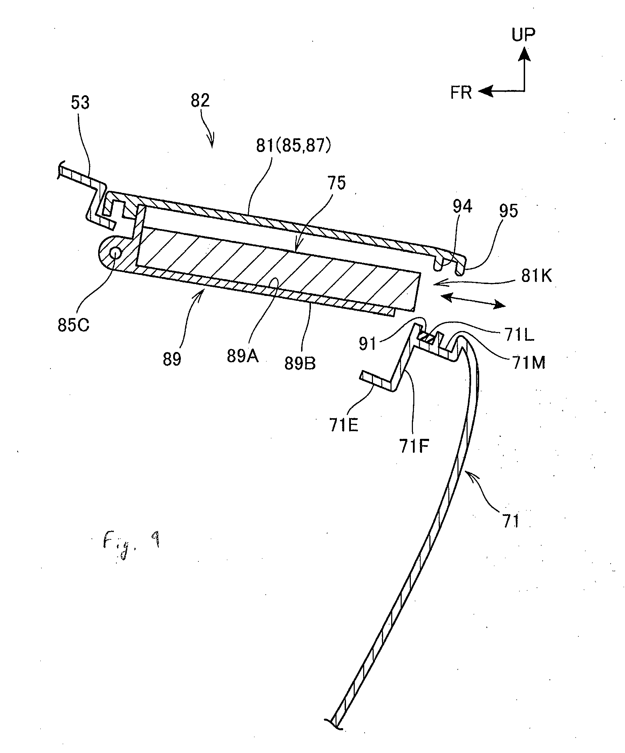

Fig. 9 is a vertical cross-sectional view of the mobile terminal housing part 82 with the window 81 opened.

As shown in this drawing, when the window 81 is opened by pivoting the mounting part 89B about the pivot shaft 85C, an opening portion 81 K which is open towards the rear, which is the rider side, is created between the window 81 and the mounting part 89B. The mobile terminal 75 can easily be put into and out of the mobile terminal housing part 82 through the opening portion 81 K, as indicated by the double-headed arrow.

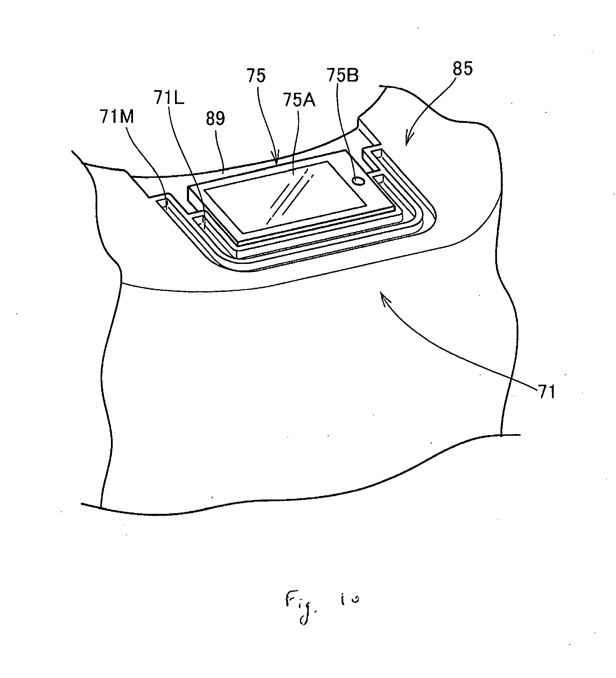

Fig. 10 is a perspective view of the mobile-terminal housing part 82 without the window 81.

As shown in this drawing, the bulging part 71 is provided with inner and outer groove portions 71 L and 71 M, each extending in a U shape surrounding the left, right and rear sides of the mount 89. The inner groove portion 71 L is formed as a seal groove to accommodate a seal member, whereas the outer groove portion 71 M is formed as a groove without a seal member.

The window 81 includes inner and outer protruding portions 94 and 95, corresponding to the inner and outer groove portions 71 L and 71 M. The protruding portions 94 and 95 protrude downward from the window 81. The inner protruding portion 94 comes into contact with a seal member 91 inside the inner groove portion 71 L to close the gap between the bulging part 71 and the window 81. The outer protruding portion 95 enters the outer groove portion 71 M to position the window 81 with respect to the bulging part 71.

Thus, the window 81 can be positioned in the closed state, and the gap between the bulging part 71 and the window 81 can be closed as well.

In this configuration, like the first embodiment, a rear end position P3 of the bulging part 71 bulging from the front part cover 55 toward a seat 11 is set forward of a lowermost portion P1 of the upper surface of a floor tunnel part 65. Moreover, the window 81 which is provided in the upper surface of the bulging part 71 and through which the mobile terminal 75 is visible is provided in a region rearward of a front end position P4 of a handlebar 27 and forward of rear end positions of the handlebar 27 and the bulging part 71 and below an upper end position P5 of the handlebar 27. Thus, it is possible to achieve the same advantageous effects as the first embodiment. Specifically, with the handlebar 27 functioning as a shield which blocks sunlight, to reduce the influence of sunlight on the window 81 and the mobile terminal housing part 82, it is possible to improve the visibility of the mobile terminal 75 and also to reduce increase in the temperature inside the housing part 82, while maintaining the ease of straddling the floor tunnel part 65 at a good level.

Further, in this configuration, the mobile terminal housing part 82 is formed only in an upper portion of the bulging part 71 as shown in Figs. 9 and 10. Accordingly, the mobile terminal housing part 82 can be formed compactly. In addition, the extent of travel during the opening and closing actions of the window 81 (which serves also as the lid member 85) only needs to be as thick as the mobile terminal 75, so that an upper space necessary for opening and closing the window 81 is small.

Furthermore, as shown in Figs. 9 and 10 again, the mobile terminal 75 is mounted in parallel with the window 81 extending downwardly and rearwardly. Thus, only a small amount of vertical space is necessary for housing the mobile terminal 75. This also allows the mobile terminal housing part 82 to be formed compactly. Accordingly, it is preferable to employ the configuration of this embodiment if there is not enough space available inside the bulging part 71.

Note that the configuration is not limited to the case where the mobile terminal 75 is placed in parallel with the window 81 and the upper surface cover 53. Like the first embodiment, the mobile terminal 75 may be arranged inclined downwardly rearwardly at a higher inclination than the window 81 and the upper surface cover 53. In sum, the mobile terminal 75 needs to be placed at an angle that allows the mobile terminal 75 to be visible. Further, the second window 88 (Fig. 7) formed of a variable light transmission filter may be disposed on the rider RD side with respect to the mobile terminal 75 in this embodiment as well.

The foregoing embodiments merely show some modes of the present invention and can be modified and applied in any other suitable ways without departing from the gist of the present invention.

For example, although each of the foregoing embodiments has described the case where the handlebar cover 72 reduces direct sunlight to the window 81, the handlebar cover 72 may be provided with a shading portion 72H that serves as a sunshade for the window 81.

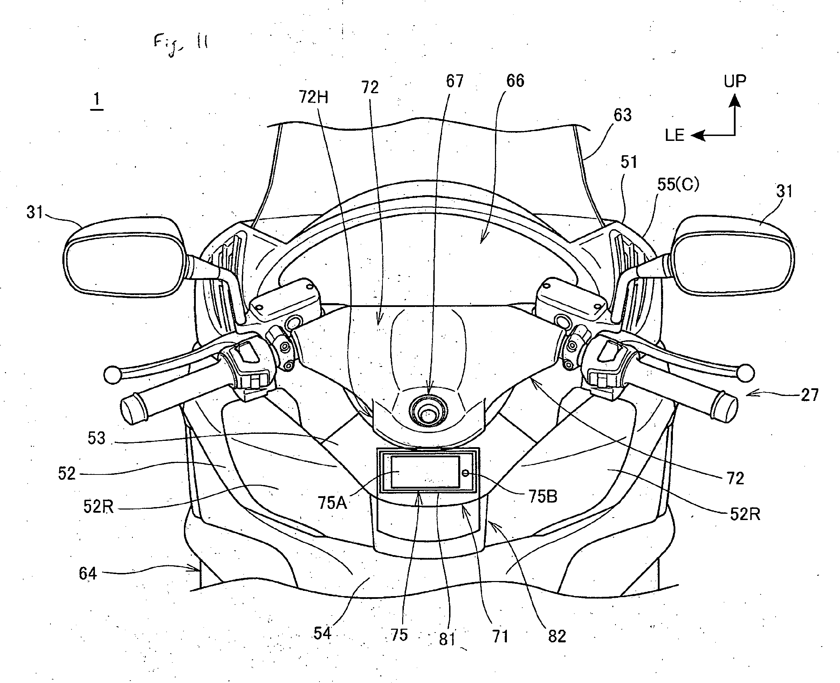

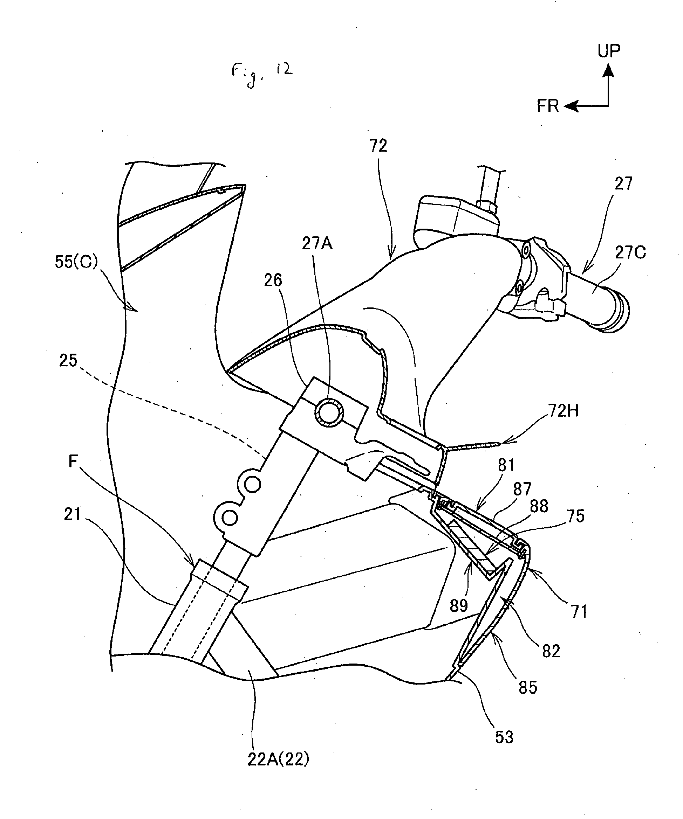

Figs. 11 and 12 show an example where the handlebar cover 72 of the first embodiment is provided integrally with the shading portion 72H. Fig. 11 is a view of the front part of the vehicle body as seen from the rider RD side. Fig. 12 is a cross-sectional side view showing the handlebar cover 72 together with its peripheral structure. As shown in these drawings, the shading portion 72H is located rearwardly of the key cylinder 67, extends in the lateral direction of the vehicle so as to cover the width of the window 81 in a plan view of the vehicle body (Fig. 11), and extends toward the rear of the vehicle body above the window 81 in a side view of the vehicle body (Fig. 12).

Moreover, the rear end of the shading portion 72H is set closer to the front of the vehicle body than the rear end of the window 81 is. Thus, the rider RD can see the window 81 without the shading portion 72H blocking his or her view.

By providing the shading portion 72H designed for the window as described above, it is possible to even further reduce the influence of sunlight on the window 81 and the temperature increase. Moreover, since the shading portion 72H is provided integrally with the handlebar cover 72, the shading portion 72H can be formed at the time of moulding the handlebar cover 72, thus making it possible to avoid an increase in the number of parts and also to attach the handlebar cover 72 through the same attachment work as those performed conventionally. Accordingly, cost increase can be reduced.

Further, although the previous embodiments have described the case where the window 81 is located substantially laterally centrally with respect to the vehicle body, the configuration is not limited to this case. The position of the window 81 may be changed within the region rearward of the front of the handlebar 27 and forward of the rear ends of the handlebar 27 and the bulging part 71 and below the upper end of the handlebar 27. In this case, the window 81 may be provided at such a position as to be overlapped by the handlebar 27 in a plan view of the vehicle body. In this way, shade can be formed around the window 81 effectively.

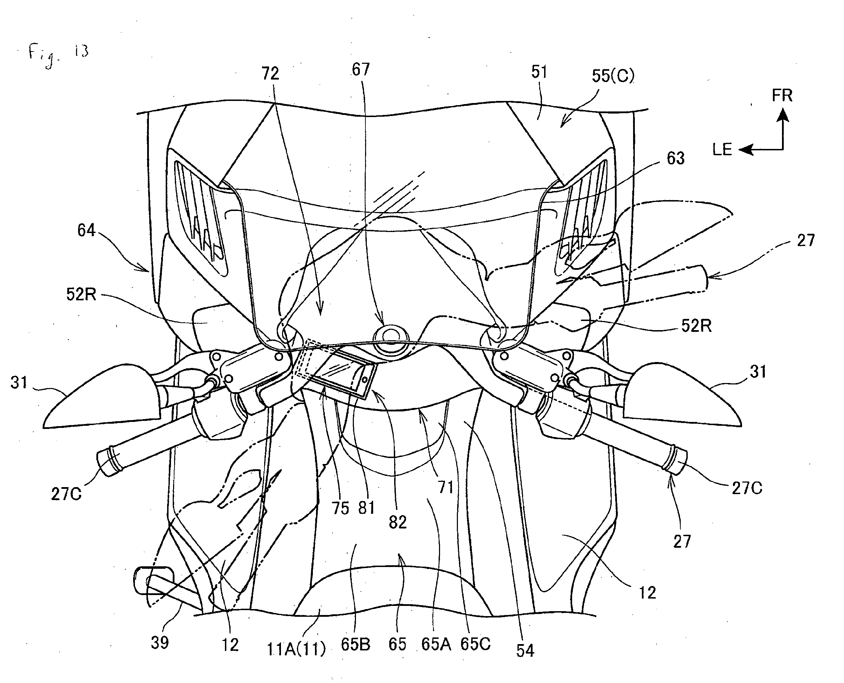

Moreover, as shown in Fig. 13, the window 81 may be disposed such that almost the whole window 81 is situated under and is overlapped by the handlebar 27 in a plan view of the vehicle body when the handlebar 27 is fully turned. According to this configuration, it is possible to more effectively reduce the increase in the temperature of the mobile terminal 75 due to sunlight when the motorcycle 1 is parked with the handlebar 27 fully turned.

Further, the application of the present invention is not limited to the motorcycle 1 shown in Fig. 1. The present invention is applicable to other motorcycles, and to saddle-ride type vehicles other than motorcycles. Note that saddle-ride type vehicles refer to vehicles including all vehicles which a rider drives while sitting astride on the vehicle body, such as motorcycles (including mopeds) as well as three-wheeled vehicles and four-wheeled vehicles categorized as ATVs (all terrain vehicles).

## Claims

1. A saddle-ride type vehicle having a mobile terminal housing structure, said vehicle comprising:
a handlebar (27) joined to a handlebar shaft (25) rotatably supported on a head pipe (21);
a front part cover (55) covering a peripheral area of the head pipe (21);
a floor tunnel part (65) lying between a rear lower portion of the front part cover (55) and a rider seat (11);
a bulging part (71) provided on the front part cover (55) and bulging toward the rider seat (11);
a housing part (82) provided on the bulging part (71) and being capable of housing a mobile terminal (75); and
a window (81) provided in an upper surface of the housing part (82) and through which the mobile terminal (75) is visible,
wherein a rear end of the bulging part (71) is set forward of a lowermost portion of an upper surface of the floor tunnel part (65), and
the window (81) is provided in a region rearwardly of a front end of the handlebar (27) and forwardly of rear ends of the handlebar (27) and the bulging part (71), and below an upper end of the handlebar (27); said structure **characterised in that**
the window (81) has a surface which is substantially continuous with the front part cover (55), and
the housing part (82) has a mounting surface (89A) adapted to mount the mobile terminal (75) inclined downwardly and rearwardly at a higher inclination than the window (81).

2. The saddle-ride type vehicle according to claim 1,
wherein the window (81) is inclined downwardly and rearwardly, and
the housing part (82) is adapted to support the mobile terminal (75) downwardly and rearwardly.

3. The saddle-ride type vehicle according to any preceding claim, further comprising a handlebar cover (72) covering the handlebar (27).

4. The saddle-ride type vehicle according to claim 3, wherein the handlebar cover (72) is provided with a shading portion (72H) which serves as a sunshade for the window (81).

5. The saddle-ride type vehicle according to any preceding claim, wherein the window (81) is provided in such a region as to be situated under and be overlapped by the handlebar (27) in a plan view when the handlebar (27) is fully turned.

6. The saddle-ride type vehicle according to any one of claims 1 to 4, wherein the window (81) is provided at a substantially central position of the handlebar (27) in a plan view.

7. The saddle-ride type vehicle according to any preceding claim, wherein the window (81) includes a variable light transmission filter (88) disposed on a rider side with respect to the mobile terminal (75), and configured to switch to a light-transmitting state when the saddle-ride type vehicle is in operation, and to switch to a non-light-transmitting state when the saddle-ride type vehicle is not in operation.

## Patentansprüche

1. Fahrzeug vom Aufsitzsattel-Typ mit einer Gehäuseanordnung für ein mobiles Endgerät, wobei das Fahrzeug Folgendes umfasst:
eine Lenkstange (27), verbunden mit einer Lenkstangenachse (25), drehbar verbunden mit einem Lenkkopfrohr (21);
eine Vorderteilabdeckung (55), die einen peripheren Bereich des Lenkkopfrohrs (21) abdeckt;
einen Bodentunnelteil (65), angeordnet zwischen einem hinteren unteren Abschnitt der Vorderteilabdeckung (55) und einem Fahrersitz (11);
einen Ausbuchtungsteil (71), bereitgestellt an der Vorderteilabdeckung (55) und ausgebuchtet in Richtung des Fahrersitzes (11);
einen Gehäuseteil (82), bereitgestellt auf dem Ausbuchtungsteil (71) und in der Lage, ein mobiles Endgerät (75) aufzunehmen; und
ein Fenster (81), bereitgestellt an einer oberen Oberfläche des Gehäuseteils (82), durch welches das mobile Endgerät (75) zu sehen ist,
wobei ein hinteres Ende des Ausbuchtungsteils (71) vor einem tiefsten Abschnitt einer oberen Oberfläche des Bodentunnelteils (65) angeordnet ist, und
das Fenster (81) in einem Bereich hinter einem vorderen Ende der Lenkstange (27), vor den hinteren Enden der Lenkstange (27) und dem Ausbuchtungsabschnitt (71) und unter einem oberen Ende der Lenkstange (27) angeordnet ist; wobei die Anordnung **dadurch gekennzeichnet ist, dass**
das Fenster (81) eine Oberfläche aufweist, die im Wesentlichen mit der Vorderteilabdeckung (55) durchgehend ausgeführt ist, und
der Gehäuseteil (82) eine Befestigungsoberfläche (89A) zum Befestigen des mobilen Endgeräts (75) aufweist, die mit einer größeren Neigung nach unten und nach hinten geneigt als das Fenster (81).

2. Fahrzeug vom Aufsitzsattel-Typ nach Anspruch 1,
wobei das Fenster (81) nach unten und nach hinten geneigt ist, und
der Gehäuseteil (82) angepasst ist, um das mobile Endgerät (75) nach unten und nach hinten abzustützen.

3. Fahrzeug vom Aufsitzsattel-Typ nach einem der vorhergehenden Ansprüche, ferner umfassend eine Lenkstangenabdeckung (72), die die Lenkstange (27) abdeckt.

4. Fahrzeug vom Aufsitzsattel-Typ nach Anspruch 3, wobei die Lenkstangenabdeckung (72) einen Beschattungsabschnitt (72H) aufweist, der als Sonnenschutz für das Fenster (81) dient.

5. Fahrzeug vom Aufsitzsattel-Typ nach einem der vorhergehenden Ansprüche, wobei das Fenster (81) derart angeordnet ist, dass es von oben gesehen bei voll eingeschlagener Lenkstange (27) unter der Lenkstange (27) und von dieser überlappt angeordnet ist.

6. Fahrzeug vom Aufsitzsattel-Typ nach einem der Ansprüche 1 bis 4, wobei das Fenster (81) von oben gesehen in einer im Wesentlichen mittigen Position der Lenkstange (27) angeordnet ist.

7. Fahrzeug vom Aufsitzsattel-Typ nach einem der vorhergehenden Ansprüche, wobei das Fenster (81) einen Filter mit veränderlicher Lichtdurchlässigkeit (88) umfasst, der bezogen auf das mobile Endgerät (75) auf einer Fahrerseite angeordnet ist, und konfiguriert ist, auf einen lichtdurchlässigen Zustand umzuschalten, wenn das Fahrzeug vom Aufsitzsattel-Typ im Betrieb ist, und auf einen nicht lichtdurchlässigen Zustand umzuschalten, wenn das Fahrzeug vom Aufsitzsatteltyp nicht im Betrieb ist.

## Revendications

1. Véhicule du type à enfourcher ayant une structure de logement de terminal mobile, ledit véhicule comprenant :
un guidon (27) joint à un arbre de guidon (25) supporté à rotation sur un tube de tête (21) ;
un panneau couvrant de partie avant (55) recouvrant une zone périphérique du tube de tête (21) ;
une partie de tunnel de plancher (65) située entre une partie inférieure arrière du panneau couvrant de partie avant (55) et un siège (11) du pilote ;
une partie renflée (71) aménagée sur le panneau couvrant de partie avant (55) se renflant vers le siège (11) du pilote ;
une partie de logement (82) aménagée sur la partie renflée (71) et qui est à même de loger un terminal mobile (75) ; et
une fenêtre (81) aménagée dans une surface supérieure de la partie de logement (82) et à travers laquelle le terminal mobile (75) est visible,
dans lequel une extrémité arrière de la partie renflée (71) est montée à l'avant d'une partie la plus basse d'une surface supérieure de la partie de tunnel de plancher (65) et
la fenêtre (81) est ménagée dans une région située à l'arrière d'une extrémité avant du guidon (27) et en avant des extrémités arrière du guidon (27) et la partie renflée (71) et en dessous d'une extrémité supérieure du guidon (27) ; ladite structure étant **caractérisée en ce que** :
la fenêtre (81) a une surface qui est sensiblement continue avec le panneau couvrant de partie avant (55) et
la partie de logement (82) a une surface de montage (89A) qui est à même de monter le terminal mobile (75) incliné vers le bas et vers l'arrière selon une inclinaison supérieure à celle de la fenêtre (81).

2. Véhicule du type à enfourcher selon la revendication 1,
dans lequel la fenêtre (81) est inclinée vers le bas et l'arrière et
la partie de logement (82) est à même de supporter le terminal mobile (75) vers le bas et l'arrière.

3. Véhicule du type à enfourcher selon l'une quelconque des revendications précédentes, comprenant en outre un panneau couvrant de guidon (72) recouvrant le guidon (27).

4. Véhicule du type à enfourcher selon la revendication 3,
dans lequel le panneau couvrant de guidon (72) est pourvu d'une partie d'ombrage (72H) qui sert de pare-soleil pour la fenêtre (81).

5. Véhicule du type à enfourcher selon l'une quelconque des revendications précédentes, dans lequel la fenêtre (81) est située dans une région telle qu'elle soit disposée en dessous du guidon (27) qui la chevauche dans une vue en plan lorsque le guidon (27) est complètement tourné.

6. Véhicule du type à enfourcher selon l'une quelconque des revendications 1 à 4, dans lequel la fenêtre (81) est ménagée dans une position sensiblement centrale du guidon (27) en vue en plan.

7. Véhicule du type à enfourcher selon l'une quelconque des revendications précédentes, dans lequel la fenêtre (81) comprend un filtre de transmission de lumière variable (88) disposé d'un côté pilote par rapport au terminal mobile (75) et configuré pour passer à un état de transmission de lumière lorsque le véhicule du type à enfourcher est en service et pour passer à un état ne transmettant pas la lumière lorsque le véhicule à enfourcher n'est pas en service.
